Europäisches Patentamt

European Patent Office

Office européen des brevets

(11) Veröffentlichungsnummer: **0 323 587**
**A1**

(12) # EUROPÄISCHE PATENTANMELDUNG

(21) Anmeldenummer: **88120861.5**

(22) Anmeldetag: **14.12.88**

(51) Int. Cl.⁴: **A47J 39/02 , A47J 27/10**

(30) Priorität: **08.01.88 CH 62/88**

(43) Veröffentlichungstag der Anmeldung:
**12.07.89 Patentblatt 89/28**

(84) Benannte Vertragsstaaten:
**AT BE CH DE ES FR GB GR IT LI LU NL SE**

(71) Anmelder: **Beck, Johann**
**Sebaldematt 33**
**CH-6018 Buttisholz(CH)**

(72) Erfinder: **Beck, Johann**
**Sebaldematt 33**
**CH-6018 Buttisholz(CH)**

(74) Vertreter: **Kemény, Andreas**
**c/o Kemény AG Patentanwaltbüro Postfach**
**3414**
**CH-6002 Luzern(CH)**

(54) **Vorrichtung zum Bereithalten von Speisen und Getränken.**

(57) Das Innere (21) eines Beckens (2) kann wahlweise beheizt, gekühlt oder auf Umgebungstemperatur belassen werden. Das Heizen kann durch eine elektrische Widerstandsheizung (3) erfolgen, während das Kühlen mittels eines Kühlluftkreislaufs (4) erfolgen kann. Eine Kältemaschine (5) kühlt eine Kühlkammer (43), durch welche die Luft mittels eines Ventilators (44) hindurchgenommen wird. Diese Luft wird durch die Luft-Zuleitung (41) in das Becken (2) und durch die Luft-Abflussleitung (42) aus dem Becken (2) befördert. So können im gleichen Becken (zu ungleichen Zeiten) Speisen oder Getränke gekühlt oder gewärmt werden. Man kann mehrere Becken mit jeweils eigenen Luftleitungen an die gleiche Kältekammer anschliessen. Geeignete Ventilmittel erlauben es dann die Kaltluft in geeigneter Menge nur jenen Becken zuzuführen, denen Wärme entzogen werden soll.

FIG. 1

## Vorrichtung zum Bereithalten von Speisen und Getränken

Die Erfindung betrifft eine Vorrichtung zum Bereithalten, z.B. Anrichten, von Speisen und Getränken nach dem Oberbegriff des Anspruch 1.

Als solche Vorrichtungen sind heute handelsübliche Becken bekannt, die man oft "Bain-Marie" nennt, welche zum Beispiel in Restaurant-Buffets montiert werden, und in denen Speisen warm gehalten werden können.

Im Beckenboden sind dazu meist elektrische Heizschlangen eingelassen. Flüssige Speisen oder Getränke können direkt in das Becken eingefüllt werden. Um feste oder püreeartige Speisen warm zu halten, wird üblicherweise eine einige Centimeter hohe Wasserschicht in das Becken eingefüllt und das Warmhaltegut in, wahlweise auch mit Oeffnungen für die Dampfzirkulation versehenen, Schalen über dem Wasserspiegel so angeordnet, dass es vom Wasserdampf gewärmt wird.

Um in einem sogenannten "Bain-Marie" Speisen oder Getränke kühlen zu können, muss die Heizung ausgeschaltet werden; es muss Eis in das Becken gefüllt und das Kühlgut möglichst so in das Becken eingebracht werden, dass es mit dem Eis und/oder mit dem Eiswasser in direkter Berührung steht.

Dabei ist es besonders nachteilig, dass je nach Umgebungstemperatur mehrmals täglich Schmelzwasser entfernt und frisches Eis in das Becken nachgefüllt werden muss.

Wollte man diesen Nachteil vermeiden, musste man bisher speziell hierfür eine an sich bekannte Kühltruhe und/oder eine Kühlvitrine, welche nach einem allgemein bekannten Verfahren arbeitet, installieren.

Weder kann ein heute bekanntes "Bain-Marie" aktiv kühlen, noch kann eine Kühltruhe zum Wärmen von Speisen und Getränken verwendet werden. Dies ist deshalb besonders nachteilig, weil heute, in zunehmendem Masse speziell im Gastgewerbe, zu unterschiedlichen Tageszeiten am selben Buffet kalte und/oder warme Speisen angeboten werden sollen.

Der Platzbedarf eines in oben beschriebener Art, mit einigen "Bain-Marie" und Kühltruhen, ausgerüsteten Buffets ist aber beträchtlich, da eigens für jede Aufgabe ein Gerät notwendig ist.

Der Erfindung liegt die Aufgabe zu Grunde, eine wirtschaftlich vorteilhafte Lösung, zum wahlweisen Wärmen und Kühlen von Speisen und Getränken zu schaffen. Dabei soll zum Umstellen von warm auf kalt, kein Umbau der Vorrichtung notwendig sein.

Zur Lösung der Aufgabe wird eine in Anspruch 1 definierte Vorrichtung vorgeschlagen.

Die Vorrichtung eignet sich zum Bereithalten jeglicher Art von Speisen und Getränken unabhängig davon, ob diese warm gehalten, gekühlt werden oder auf Umgebungstemperatur gehalten werden sollen.

Dabei ist es vorteilhaft, dass im Gebrauch ohne Wechseln oder Umbauen der Vorrichtung, diese in einfacher Weise von Wärmen auf Kühlen und umgekehrt umgeschaltet werden kann.

Das Transport-Medium für Kälte, nachfolgend Medium genannt, ist vorteilhafterweise Luft, da diese gegenüber Lebensmitteln unbedenklich ist und somit aufwendige Sicherheitsmassnahmen zur Trennung des Mediums vom zu kühlenden Gut entfallen können.

Es ist sogar besonders vorteilhaft, wenn das Medium so in das Innere des Beckens geleitet wird, dass das zu kühlende Gut davon umspült wird. Einerseits wird damit die gewünschte Kühltemperatur im Inneren des Beckens sehr schnell erreicht, was die Umschaltzeit von Heizen auf Kühlen kurz hält. Andererseits kann die gewünschte Temperatur des zu kühlenden Gutes genau eingehalten werden.

Das Medium wird vorteilhafterweise mittels einer Umwälzvorrichtung, z.B. einem Ventilator, so transportiert, dass es erst an einem an sich bekannten Wärmetauscher gekühlt wird, um dann durch eine Medium-Zuleitung zum Becken zugebracht zu werden.

Um den Wirkungsgrad der Vorrichtung zu erhöhen und ein unnötiges Vereisen des Wärmetauschers zu verhindern, ist es vorgesehen, den Kühlkreislauf durch das Abführen des Mediums vom Becken mittels einer Medium-Abflussleitung, wenigstens teilweise, zu schliessen.

Um den Energieverbrauch weiter zu senken, ist es ratsam, das Becken und die Medium-Zuleitung und Abflussleitung zu wärmeisolieren.

Die Medium-Zuleitung und die -Ableitung können so medienleitend mit dem Becken in Verbindung stehen, dass das Medium beim Zuführen zum und/oder beim Abführen vom Becken durch eine eventuell vorhandene Hohlwandung des Beckens geführt wird; das Medium kann dabei auch ins Innere des Beckens gelangen und von dort wieder abgeleitet werden.

Besonders vorteilhaft ist es jedoch, wenn das Medium direkt in das und aus dem Inneren des Beckens geführt wird, da so ein guter Kühleffekt, mit genauer Temperaturregelung und kurzer Ansprechzeit rationell erreicht wird.

Die Vorrichtung kann auch mehrere Becken enthalten, die die oben geschilderten Eigenschaften aufweisen; je nach Wunsch können diese Bek-

ken einzeln und/oder zu mehreren gemeinsam zwischen Heizen, Kühlen und Umgebungstemperatur wahlweise umschaltbar sein. In ausserordentlich vorteilhafter Weise wird für mehrere Becken gemeinsam nur ein Wärmetauscher und nur eine Umwälzvorrichtung benötigt, wobei die getrennte Abschaltung der einzelnen Becken-Kühlungen, z.B. mittels Luftklappen erfolgen kann.

Es kann sinnvoll sein, in ein auf Kühlung geschaltetes Becken, einen flüssigen und/oder festen Stoff, z.B. Wasser oder Eis, z.B. zum Kühlen eines Salatbuffets, einzufüllen, wobei dies vorzugsweise niveaureguliert erfolgen kann.

Gerade bei der Verwendung des Beckens als sogenanntes "Nass-Bain-Marie", d.h. mit einer Wasserfüllung im Heizbetrieb, oder wie oben beschrieben, im Kühlbetrieb, ist es sinnvoll, dass die ins Innere des Beckens führenden Mündungen der Medium-Zuleitung und -Abflussleitung und/oder diese Leitungen selbst Schutzvorrichtungen gegen das Eindringen eines kühlmediumfremden Stoffes, z.B. Wasser, aufweisen.

In bevorzugter Weise kann der Wärmetauscher als Verdampfer einer an sich bekannten Kältemaschine ausgebildet sein.

Man kann durch geeignete, an sich bekannte thermostatische Mittel das Innere des Beckens auf einer gewünschten Temperatur halten, auch, wenn sich die Umgebungstemperatur verändert.

Vorteilhaft ist es, eine selbsttätige Abtauregelung für den Wärmetauscher, z.B. mittels einer Schaltuhr so vorzusehen, damit dieser keinen Schaden nehmen kann und der Wirkungsgrad der Anlage durch den Betrieb möglichst nicht verschlechtert wird.

Weiter ist es vorteilhaft die Heizung, die meist im Hohlboden des "Bain-Marie" eingelassen ist, gegen Kondenswasser zu schützen, z.B. durch Bohrungen in einer eventuellen unteren Abschirmung.

Es ist vorteilhaft, dass man bestimmte ältere Anlagen nach der Erfindung nachrüsten kann.

Die Erfindung wird nachstehend anhand der rein schematischen Zeichnung beispielsweise besprochen. Es zeigen:

Fig. 1 ein allgemeines Funktionsschema einer erfindungsgemässen Vorrichtung,

Fig. 2 einen Schnitt durch das Becken der Fig. 1 mit Detailschema einer Wasserstandsregelung.

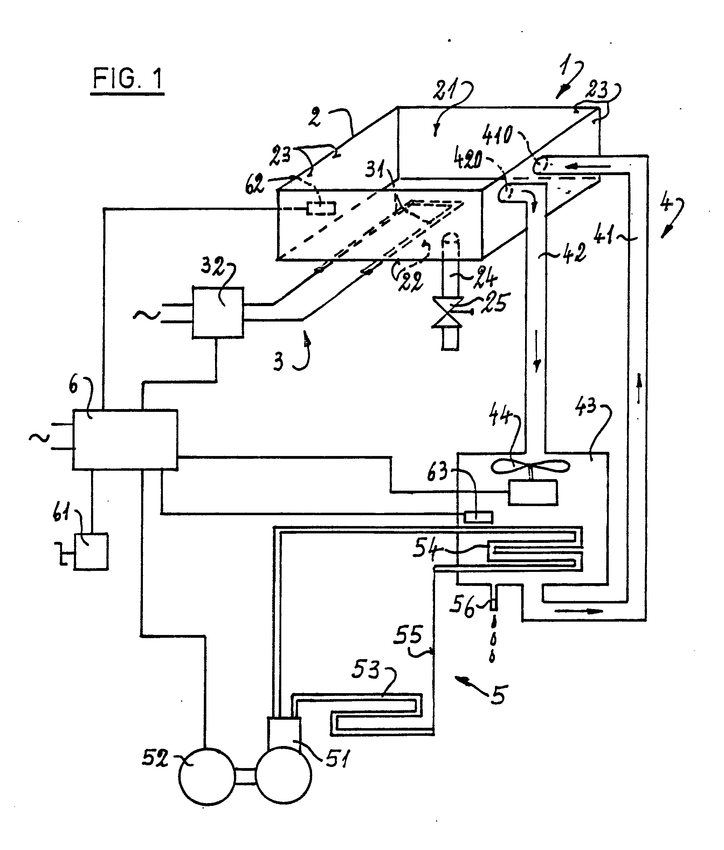

In der Zeichnung sind die Teile wie folgt bezeichnet:
1 Die Vorrichtung an sich (Fig. 1)
2 Becken
21 Inneres von 2
22 Boden von 2
23 Wände von 2

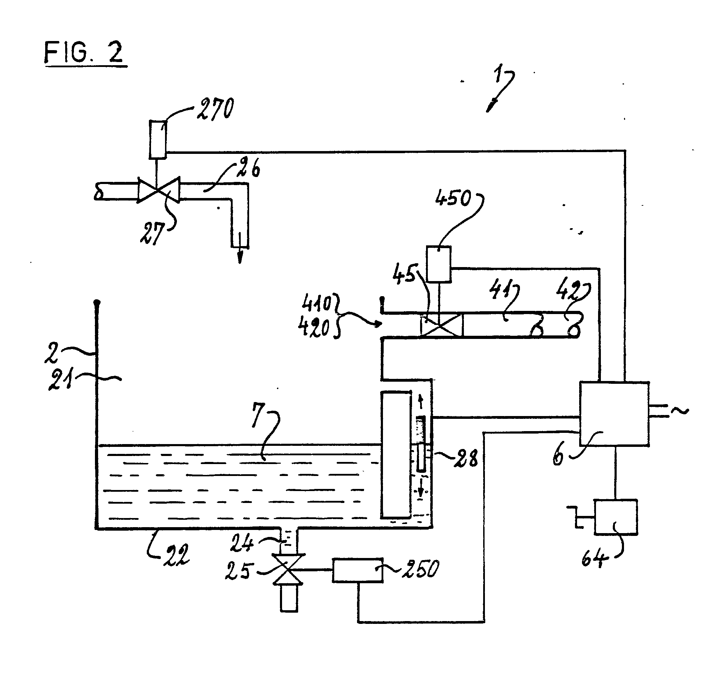

24 Abfluss von 2
25 Ablasshahn von 24
250 Elektroantrieb von 25, in Fig. 2
26 Wasserzufluss, in Fig. 2
27 Wasserhahn (mechanisch oder elektrisch), in Fig. 2
270 Elektroantrieb von 27, in Fig.2
28 Wasserstandsmesser, elektrisch, in Fig. 2
3 elektrische Widerstandsheizung
31 Heizelement von 3
32 Anschlusskasten von 3
4 Luftkreislauf zur Kühlung von 21
41 Luft-Zuleitung von 4 (Medium-Zuleitung)
410 Mündung von 41
42 Luft-Abflussleitung von 4 (Medium-Abflussleitung)
420 Mündung von 42
43 Kühlkammer von 4
44 Luft-Ventilator von 4 (Umwälzvorrichtung)
45 Schutzklappen für 41 und 42, in Fig. 2
450 Elektroantrieb von 450, in Fig. 2
5 Kältemaschine
51 Kolbenkompressor von 5
52 elektrischer Antriebsmotor von 51
53 Kondensator von 5
54 Verdampfer von 5 (Wärmetauscher)
55 Kapillarrohr von 5 (Druckleitung)
56 Abtauwasser-Abfluss von 44
6 Steuerung
61 Temperatur-Vorwahlschalter zu 6
62 Becken-Thermostat zu 6
63 Enteisungs-Thermostat zu 6
64 Wasserstand-Vorwahlschalter, in Fig. 2
7 Wasser, in Fig. 2

Die Vorrichtung 1 setzt sich im wesentlichen zusammen aus dem Becken 2, der elektrischen Widerstandsheizung 3, dem Luftkreislauf 4, der Kältemaschine 5 und der Steuerung 6.

Das Becken 2 wird vom Boden 22 und den Wänden 23 umschlossen. Im Inneren 21 des Beckens 2 befindliches Wasser 7 (Fig. 2) oder andere Flüssigkeiten können durch einen im Boden 22 eingelassenen Abfluss 24, mittels Oeffnen des Ablasshahns 25, abgelassen werden.

Zum Wärmen des Beckens 2 wird das Heizelement 31 der elektrischen Widerstandsheizung 3, das mittels Anschlusskasten 32 mit dem Netz verbunden ist, eingeschaltet. Das Heizelement 31 ist unter dem Boden 22 des Beckens 2 angeordnet und durch eine nicht gezeichnete Abschirmung unten abgedeckt. Damit sich kein Kondenswasser im Heizungsbereich ansammeln kann, kann es nützlich sein, die (nicht gezeichnete) untere Abschirmung mit Ablauföffnungen zu versehen.

Zur Kühlung des Inneren 21 des Beckens 2 wird die Kühlluft im Luftkreislauf 4 von einem Luft-Ventilator 45 umgewälzt. In der Kühlkammer 44 wird die Luft abgekühlt, indem sie am Verdampfer 54 der Kältemaschine 5 vorbeistreicht. Durch die Luft-Zuleitung 41 wird sie dann zum Becken 2 gepumpt, wo sie aus der Mündung 410 ins Innere 21 des Beckens 2 geführt wird. Hier umströmt die Kühlluft das (aus Gründen der Uebersichtlichkeit nicht gezeichnete) zu kühlende Gut und/oder das eventuell im Inneren 21 befindliche Wasser 7 (Fig. 2) und nimmt dabei Wärme auf. Der Luftkreislauf 4 zur Kühlung des Inneren 21 des Beckens 2 wird geschlossen, indem die so erwärmte Luft durch die Mündung 420 der Luft-Abflussleitung 42 in die Kühlkammer 43 zurückgesaugt wird.

In der Kältemaschine 5 wird mittels eines Kolbenkompressors 51, der von einem elektrischen Antriebsmotor 52 angetrieben wird, Kühlmittel (z.B. Freon) umgewälzt. Das Külhlmittel wird vom Kompressor 51 verdichtet, im Kondensator 53 unter Wärmeabgabe kondensiert und durch das Kapillarrohr 55 zum Verdampfer 54 geleitet, wo durch Verdampfen Kälte entsteht.

Die Steuerung 6 übernimmt die Aufgaben, einerseits die Vorrichtung so zu steuern, dass die vorgewählte Lufttemperatur im Innern 21 des Beckens 2 auch bei sich verändernder Umgebungstemperatur, innerhalb bestimmter Grenzen, eingehalten wird, und andererseits (im Kühlbetrieb) das Vereisen des Verdampfers 54 zu verhindern, bzw. diesen wenn nötig selbsttätig abzutauen. Am Temperatur-Vorwahlschalter 61 wird die gewünschte Becken-Innentemperatur eingestellt. Je nach vorgewählter Innen- und vorhandener Umgebungstemperatur schaltet die Steuerung 6 zum Heizen die eiektrische Widerstandsheizung 3 oder zum Kühlen die Kältemaschine 5 und den Luftkreislauf 4 ein. Die hierfür notwendigen Informationen bezieht die Steuerung 6 vom Becken-Thermostaten 62 oder vom Enteisungs-Thermostaten 63. Das Tauwasser kann aus der Kühlkammer 43 durch den Abtau-Wasserabfluss 56 ablaufen, wobei es in an sich bekannter Weise verdunstet werden kann.

Selbstverständlich kann die Umschaltung von Heizen auf Kühlen oder Belassen auf Umgebungstemperatur auch manuell geschehen. Das ist in der Zeichnung nicht besonders dargestellt.

In Fig. 2 ist ein Ausschnitt der Vorrichtung 1 der Fig. 1 dargestellt und hinsichtlich der Wasserstandsregelung und des Wasserschutzes des Luftkreislaufs näher dargestellt. Es kann sowohl beim Wärmen als auch beim Kühlen vorteilhaft sein, wenn sich im Innern 21 des Beckens 2, einige Centimeter hoch, Wasser 7 befindet. Damit das Becken 2 leicht befüllt, geleert und der Wasserstand geregelt werden kann, weist es einen im Boden 22 eingelassenen Abfluss 24 und einen über ihm angeordneten Wasser-Zufluss 26 auf. Der Abfluss 24 besitzt einen Ablasshahn 25 und der Wasser-Zufluss 26 ein Wasserhahn 27. Beide Hähnen werden von elektrischen Antrieben 250 bzw.

270 betätig.

Die Steuerung 6 schaltet über nicht bezeichnete Steuerleitungen den entsprechenden Antrieb 250 bzw. 270 des Ablasshahns 25 oder des Wasserhahns 27 ein bzw. aus. Die zugehörigen Informationen hierfür erhält er einerseits vom Wasserstand-Vorwahlschalter 64 (Sollwert), an dem der gewünschte Wasserstand eingestellt wird, und über die Signalleitung (nicht bezeichnet) vom Wasserstandsmesser 28 (Istwert). Gleichzeitig muss aber sichergestellt sein, dass weder in die Luft-Zuleitung 41, noch in die Luft-Abflussleitung 42 Wasser 7 eindringen kann. Dies wird dadurch erreicht, dass bei den Mündungen 410, 420 der Luft-Zuleitung 41 und Luft-Abflussleitung 42 Schutzklappen 45 gegen das Eindringen von Wasser angebracht sind. Diese Schutzklappen 45 werden im Bedarfsfall, z.B. bei zu hohem Wasserstand, mittels Elektroantrieb 450, der von der Steuerung 6 über eine Steuerleitung (nicht bezeichnet) errregt wird, betätigt.

Gegebenenfalls können mehrere Becken 2 nebeneinander vorgesehen sein, wobei die Steuerung so ausgelegt sein kann, dass man wahlweise einzelne Becken oder ganze Beckengruppen gemeinsam kühlen oder heizen kann. Während man zum Heizen eines Beckens vorteilhaft jedem Becken seine eigene Widerstandsheizung gibt, ist es vorteilhaft, wenn die gleiche Kältemaschine zum Kühlen der Luft für alle Becken dient. Durch hier nicht dargestellte Ventilmittel kann man erreichen, dass nur die Luftleitungen jener Becken luftführend sind, welche gekühlt werden sollen. Durch die verschiedene Regelung solcher Ventilmittel ist auch eine individuelle Temperatursteuerung der einzelnen Becken möglich.

Aus Uebersichtlichkeitsgründen wurde auf die Darstellung der Isolation verzichtet. Besonders die Luftleitungen und das Becken sollte zur Steigerung der Wirtschaftlichkeit des Kältehaushaltes im Kühlbetrieb passend isoliert sein.

## Ansprüche

1. Vorrichtung zum Bereithalten von Speisen und Getränken, mit einem Becken, welches durch eine ein- und aus-schaltbare Heizung beheizbar ist, DADURCH GEKENNZEICHNET, dass das Becken (2) durch eine Medium-Zuleitung (41) und eine -Abflussleitung (42) mit einem Wärmetauscher (54) zum Kühlen eines Transport-Mediums für Kälte und mit einer Umwälzvorrichtung (44) zum Zubringen des Mediums zum Becken (2) und zum Abführen des Mediums vom Becken (2) medienleitend verbunden ist, und dass Schaltmittel (6, 61, 62, 63) vorgesehen sind, durch welche das Becken (2) wahlweise auf Umgebungstemperatur belassbar, heizbar oder kühlbar ist.

2. Vorrichtung nach Anspruch 1, dadurch gekennzeichnet, dass die Medium-Zuleitung (41) und/oder -Abflussleitung (42) durch Mündungen (410; 420) mit dem Inneren (21) des Beckens (2) medienleitend verbunden sind.

3. Vorrichtung nach Anspruch 1 oder 2, dadurch gekennzeichnet, dass mehrere Becken (2) vorgesehen sind, die einzeln und/oder zu mehreren gemeinsam durch die Schaltmittel (6, 61, 62, 63) wahlweise auf Umgebungstemperatur belassbar, heizbar oder kühlbar sind.

4. Vorrichtung nach einem der Ansprüche 1 bis 3, dadurch gekennzeichnet, dass das Becken (2), die Medium-Zuleitung (41) und -Abflussleitung (42) wärmeisoliert sind.

5. Vorrichtung nach einem der Ansprüche 1 bis 4, dadurch gekennzeichnet, dass das Innere (21) des Beckens (2) zumindest teilweise, vorzugsweise niveauregulierbar (6, 28, 64) mit einem festen und/oder flüssigen Stoff (7), z.B. Wasser, füllbar ist.

6. Vorrichtung nach Anspruch 5, dadurch gekennzeichnet, dass die ins Innere (21) des Beckens (2) führenden Mündungen (410, 420) der Medium-Zuleitung (41) und -Abflussleitung (42) und /oder diese Leitungen (41, 42) selbst Schutzvorrichtungen (45) gegen das Eindringen des besagten Stoffes (7) aufweisen.

7. Vorrichtung nach einem der Ansprüche 1 bis 6, dadurch gekennzeichnet, dass der Wärmetauscher (54) als Verdampfer einer Kältemaschine (5) ausgebildet ist.

8. Vorrichtung nach einem der Ansprüche 1 bis 7, dadurch gekennzeichnet, dass sie wenigstens eine Thermostat-Regelung (6, 61, 62) aufweist.

9. Vorrichtung nach einem der Ansprüche 1 bis 8, dadurch gekennzeichnet, dass sie eine selbsttätige Abtauregelung (6, 63) aufweist.

10. Vorrichtung nach einem der Ansprüche 1 bis 9, dadurch gekennzeichnet, dass die Heizung (3) gegen Kondenswasser geschützt ist.

FIG. 1

## FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | US-A-4593752 (TIPTON) <br> * das ganze Dokument * | 1, 5, 7-9 | A47J39/02 <br> A47J27/10 |
| Y | | 2, 3 | |
| Y | US-A-3999601 (SPANOUDIS) <br> * das ganze Dokument * | 2, 3 | |
| X | DE-C-846450 (OERTEL) <br> * das ganze Dokument * | 1, 5 | |
| A | GB-A-1203690 (FELLOWS) <br> * das ganze Dokument * | 1, 2, 4 | |
| A | DE-A-2851918 (SPASOJEVIC) <br> * Seite 6, Zeile 25 - Seite 9, Zeile 32; Figuren 1-5 * | 1, 7 | |
| A | GB-A-2066441 (SANKYO ELECTRIC CO. ) | | |

RECHERCHIERTE SACHGEBIETE (Int. Cl.4 )

A47J

Der vorliegende Recherchenbericht wurde für alle Patentansprüche erstellt

| Recherchenort | Abschlußdatum der Recherche | Prüfer |
|---|---|---|
| DEN HAAG | 23 MAERZ 1989 | MEINDERS H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)